# EUROPÄISCHE PATENTSCHRIFT

(11) **EP 0 792 912 B1**
(45) Veröffentlichungstag und Bekanntmachung des Hinweises auf die Patenterteilung: **31.10.2001**
(21) Anmeldenummer: 97101596.1
(22) Anmeldetag: 03.02.1997
(51) Int. Cl.: C08K 5/5313, C08L 77/00

(54) **Schwerentflammbare Polyamidformmassen**
Flame retardant polyamide moulding compounds
Compositions à mouler de résine polyamide résistantes à la flamme

(30) Priorität: 29.02.1996 DE 19607635
(43) Veröffentlichungstag der Anmeldung: 03.09.1997
(73) Patentinhaber: Ticona GmbH, 65451 Kelsterbach (DE)
(72) Erfinder: Kleiner, Hans-Jerg, Dr., 61476 Kronberg (DE); Budzinsky, Winfried, 65812 Bad Soden (DE); Kirsch, Günther, Dr., 65812 Bad Soden (DE)

(56) Entgegenhaltungen:
- DE-A- 2 447 727
- DE-A- 2 827 867
- US-A- 4 208 321

## Beschreibung

Die Erfindung betrifft schwerentflammbare Polyamidformmassen, die Calcium-oder Aluminiumphosphinate enthalten.

Polymere werden häufig durch Zusätze von phosphorhaltigen und halogenhaltigen Verbindungen flammfest gemacht. Einige Polymere werden bei hohen Temperaturen, z.B. bei 250°C oder höheren Temperaturen, verarbeitet. Aus diesem Grund sind viele bekannte Flammhemmer für die Polymeren ungeeignet, da sie zu flüchtig sind oder sich bei diesen hohen Temperaturen zersetzen. Alkalisalze von Phosphinsäuren sind thermisch stabil und bereits als flammhemmende Zusätze zu Polyamid-Formmassen vorgeschlagen worden (DE-A1-2 447 727). Sie neigen jedoch zu Korrosionseffekten. Ebenfalls sind Zinksalze eingesetzt worden, deren flammhemmende Wirkung jedoch nicht voll befriedigt. Schwerentflammbare Polyamide lassen sich auch herstellen durch den Einsatz von Phosphinsäuresalzen in Kombination mit Stickstoffbasen wie Melamin, Dicyandiamid oder Guanidin (DE-A1-28 27 867). Eine weitere große Klasse von Phosphinsäuresalzen sind die polymeren Metallphosphinate. Diese stellen nichtionische Koordinationskomplexe dar und sind in organischen Lösungsmitteln löslich. Sie sind als Flammschutzkomponenten auch für Polyamide geeignet (US-4 208 321). Nachteilig ist die im allgemeinen schwierige technische Herstellung dieser Metallphosphinatpolymeren.

Es wurde nun überraschenderweise gefunden, daß Calcium- und Aluminiumsalze von Phosphin- oder Diphosphinsäuren eine ausgezeichnete flammhemmende Wirkung in Polyamid-Kunststoffen zeigen, während andere Metallsalze der gleichen Phosphin- oder Diphosphinsäuren eine nur ungenügende flammhemmende Wirkung zeigen.

Gegenstand der Erfindung ist eine Formmasse, die ein Polyamid und ein Phosphinsäuresalz der Formel (I) und/oder ein Diphosphinsäuresalz der Formel (II) und/oder deren Polymere 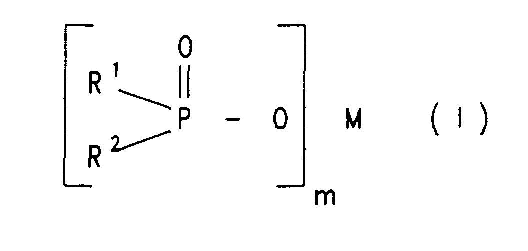 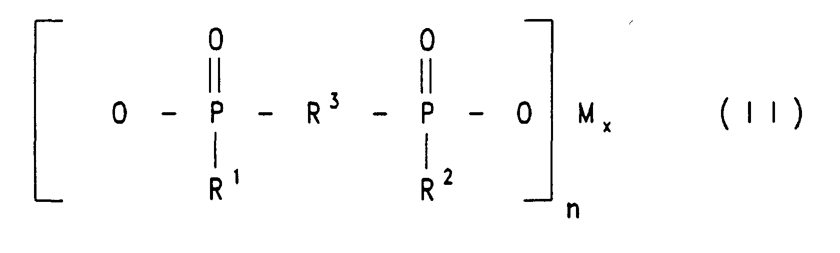 enthält, worin
- R¹, R²: C₁-C₁₆-Alkyl, vorzugsweise C₁-C₈-Alkyl, linear oder verzweigt, z.B. Methyl, Ethyl, n-Propyl, iso-Propyl, n-Butyl, tert.-Butyl, n-Pentyl, n-Octyl, Phenyl;
- R³: C₁-C₁₀-Alkylen, linear oder verzweigt, z.B. Methylen, Ethylen, n-Propylen, iso-Propylen, n-Butylen, tert.-Butylen, n-Pentylen, n-Octylen, n-Dodecylen;
Arylen, z.B. Phenylen, Naphthylen;
Alkylarylen, z.B. Methyl-phenylen, Ethyl-phenylen, tert.-Butylphenylen, Methyl-naphthylen, Ethyl-naphthylen, tert.-Butylnaphthylen;
Arylalkylen, z.B. Phenyl-methylen, Phenyl-ethylen, Phenylpropylen, Phenyl-butylen;
- M: Calcium-, Aluminium-Ionen;
- m: 2 oder 3;
- n: 1 oder 3;
- x: 1 oder 2
bedeuten.

Polyamide sind Polymere, die über eine Amidgruppe verbundene wiederkehrende Einheiten in der Polymerkette enthalten. Polyamide, die erfindungsgemäß eingesetzt werden können, sind beispielsweise in "Ullmann's encyclopedia of industrial chemistry, ed. Barbara Elvers, Vol. A21, Kapitel 'Polyamides' (S. 179 - 205), VCH, Weinheim-Basel-Cambridge-New York 1992" beschrieben, worauf Bezug genommen wird. Besonders geeignete Polyamide sind Polyamid 6 oder Polyamid 66. Polyamide oder Polyamid-Compounds werden im folgenden als Polymere bezeichnet.

Im folgenden bezeichnet der Begriff "Phosphinsäuresalz" Calcium- und Aluminium-Salze der Phosphin- und Diphosphinsäuren und deren Polymere.

Die erfindungsgemäßen Phosphinsäuresalze, die in wäßrigem Medium hergestellt werden, sind im wesentlichen monomere Verbindungen. In Abhängigkeit von den Reaktionsbedingungen können unter Umständen auch polymere Phosphinsäuresalze entstehen.

Geeignete Phosphinsäuren als Bestandteil der erfindungsgemäßen Phosphinsäuresalze sind beispielsweise:
Isobutyl-methyl-phosphinsäure, Octyl-methylphosphinsäure, Dimethylphosphinsäure, Ethyl-methylphosphinsäure, Diethylphosphinsäure, Methyl-n-propyl-phosphinsäure, Methan-1,2-di(methylphosphinsäure), Ethan-1,2-(dimethylphosphinsäure), Hexan-1,6-di(methylphosphinsäure), Benzol-1,4-(dimethylphosphinsäure), Methyl-phenyl-phosphinsäure, Diphenylphosphinsäure.

Die Phosphinsäuresalze können nach bekannten Methoden hergestellt werden. Die Phosphinsäuren werden dabei in wäßriger Lösung mit Metallcarbonaten, Metallhydroxiden oder Metalloxiden der betreffenden Metalle umgesetzt.

Die Menge des den Polymeren zuzusetzenden Phosphinsäuresalzes kann innerhalb weiter Grenzen variieren. Im allgemeinen verwendet man 5 bis 35 Gew.-%, bezogen auf das Polymer, bevorzugt 10 bis 25 Gew.-%, insbesondere 15 bis 20 Gew.-% des Phosphinsäuresalzes. Die optimale Menge des Phosphinsäuresalzes hängt von der Natur des Polymeren und der Art des eingesetzten Phosphinsäuresalzes ab und kann durch Versuche leicht bestimmt werden.

Die Phosphinsäuresalze können je nach Art des verwendeten Polymeren und der gewünschten Eigenschaften in verschiedener physikalischer Form angewendet werden. So können die Phosphinsäuresalze z.B. zur Erzielung einer besseren Dispersion im Polymeren zu einer feinteiligen Form vermahlen werden. Falls erwünscht können auch Gemische verschiedener Phosphinsäuresalze eingesetzt werden.

Die Phosphinsäuresalze sind thermisch stabil, zersetzen die Polymeren weder bei der Verarbeitung noch beeinflußen sie den Herstellprozess der Polyamidformmasse. Die Phosphinsäuresalze sind unter Herstellungs- und Verarbeitungsbedingungen für Polymere nicht flüchtig.

Das Phosphinsäuresalz kann in das Polymer eingearbeitet werden, indem beides vermischt und anschließend in einem Compoundieraggregat (z.B. Zweischneckenextruder) das Polymer aufgeschmolzen und das Phosphinsäuresalz in der Polymerschmelze homogenisiert wird. Die Schmelze kann als Strang abgezogen, gekühlt und granuliert werden. Das Phosphinsäuresalz kann auch direkt in das Compoundieraggregat dosiert werden.

Es ist ebenso möglich, die flammhemmenden Zusätze einem fertigen Polyamidgranulat beizumischen und direkt auf einer Spritzgießmaschine zu verarbeiten oder vorher in einem Extruder aufzuschmelzen, zu granulieren und nach einem Trocknungsprozeß zu verarbeiten.

Die Phosphinsäuresalze können auch während des Herstellprozesses des Polyamids zugegeben werden.

Dem Polymer können neben den Phosphinsäuresalzen auch Füll- und Verstärkungsstoffe wie Glasfasern, Glaskugeln oder Mineralien wie Kreide zugesetzt werden. Daneben können die Produkte andere Zusätze wie Stabilisatoren, Gleitmittel, Farbmittel, Füllstoffe, Nukleierungsmittel oder Antistatika enthalten.

Besonders bevorzugt werden Formmassen, die Polyamid, ein Phosphinsäuresalz oder Diphosphinsäuresalz der Metalle Calcium oder Aluminium und Glasfaser enthalten. Glasfaserverstärkte Formmassen gemäß der Erfindung zeigen besonders günstige flammhemmende Eigenschaften.

Phosphinsäuresalze enthaltende Polyamide eignen sich z.B. zur Herstellung von flammfesten technischen Teilen, besonders zur Herstellung von Konstruktionsteilen elektrischer Apparate, mechanischen Übertragungsteilen in Automaten und Bauteilen in Großrechenanlagen.

Es wurde nun gefunden, daß sich Polyamidformmassen, die mit Calcium- und Aluminiumphosphinaten schwerentflammbar ausgerüstet sind, eine höhere Kriechstromfestigkeit (höherer CTI) aufweisen. Die Polyamidformmassen sind vorteilhaft einsetzbar bei folgenden Anwendungen: Elektrische Bauteile, wie Spulenkörper, Transformatoren, Relais, Schalter, Steckverbindung, Motoren und Motorenteile (Rotoren, Lagerschilde etc.); dreidimensionale Teile mit integrierten Leiterstrukturen ("Molded Interconnection Devices" = MID), Sockel (z.B. SIMM-Sockel); mechanische Bauteile in Elektro- und Haushaltsgeräten, z.B. Zahnräder, Hebel, Nockenwellen, Abstandhalter, Scharniere, Gleitlager; Gehäuse, Abdeckungen und Ummantelungen oder Beschichtungen von elektrischen Bauteilen und Geräten, z.B. Kondensatorgehäuse, Relaisgehäuse, Kondensatordeckel, Kabelummantelungen; Formteile.

Diese Anwendungsbeispiele lassen sich vorzugsweise durch Spritzgießen herstellen, zum Teil werden sie aber auch durch Extrudieren oder Pressen gefertigt.

Die Polyamidformmassen können außer den Flammschutzkomponenten Füll- und Verstärkungsstoffe, wie Glasfasern, Glaskugeln, Glasflocken, Mineralien wie Talkum, Glimmer, Wollastonit, Kreide, Ruß, Farbstoffe, Stabilisatoren, Gleit- und Entformungshilfsmittel, Weichmacher und andere übliche Additive enthalten.

### Beispiele

### 1. Herstellung von Phosphinsäuresalzen

### 1.1 Herstellung des Calciumsalzes der Ethyl-methylphosphinsäure

1630 g (15,1 Mol) Ethyl-methylphosphinsäure werden in 3 l Wasser gelöst und 422,8 g (7,55 Mol) Calciumoxid (ungelöschter Kalk) portionsweise unter lebhaftem Rühren eingetragen in 1,5 Stunden, die Temperatur steigt auf 75°C. Dann wird weiter Calciumoxid eingetragen, bis eine in die Lösung eingeführte pH-Elektrode pH = 7 anzeigt. Nun wird etwas Aktivkohle zugegeben und 1,5 Stunden am Rückfluß gerührt und dann filtriert. Das Filtrat wird zur Trockene eingedampft und bei 120°C bis zu Gewichtskonstanz im Vakuum-Trockenschrank getrocknet. Man erhält 1920 g eines weißen Pulvers, das bis 300°C nicht schmilzt. Ausbeute 100 % der Theorie.

### 1.2 Herstellung des Aluminiumsalzes der Ethyl-methylphosphinsäure

2106 g (19,5 Mol) Ethyl-methylphosphinsäure werden in 6,5 l Wasser gelöst und 507 g (6,5 Mol) Aluminiumhydroxid unter lebhaftem Rühren zugegeben, dabei wird auf 85°C erwärmt. Insgesamt wird 65 Stunden bei 80 - 90°C gerührt, dann wird auf 60°C abgekühlt und abgesaugt. Man erhält nach Trocknung im Vakuum-Trockenschrank bei 120°C bis zur Gewichtskonstanz 2140 g eines feinkörnigen Pulvers, das bis 300°C nicht schmilzt. Ausbeute: 95 % der Theorie.

### 1.3 Herstellung des Calciumsalzes der Ethan-1,2-bismethylphosphinsäure

325,5 g (1,75 Mol) Ethan-1,2-bismethylphosphinsäure werden in 500 ml Wasser gelöst und 129,5 g (1,75 Mol) Calciumhydroxid portionsweise unter lebhaftem Rühren in einer Stunde eingetragen. Dann wird einige Stunden bei 90 bis 95°C gerührt, abgekühlt und abgesaugt. Man erhält 335 g nach Trocknung im Vakuum-Trockenschrank bei 150°C. Das Produkt schmilzt bis 380°C nicht. Ausbeute: 85 % der Theorie.

### 1.4 Herstellung des Aluminiumsalzes der Ethan-1,2-bismethylphosphinsäure

334,8 g (1,8 Mol) Ethan-1,2-bismethylphosphinsäure werden in 600 ml Wasser gelöst und 93,6 g (1,2 Mol) Aluminiumhydroxid portionsweise unter lebhaftem Rühren in einer Stunde eingetragen. Dann wird 24 Stunden unter Rückfluß gehalten und anschließend heiß abgesaugt und mit Wasser gewaschen. Man erhält nach Trocknung 364 g eines weißen Pulvers, das bis 380°C nicht schmilzt. Ausbeute: 100 % der Theorie.

### 1.5 Herstellung des Calciumsalzes der Methyl-propylphosphinsäure

366 g (3,0 Mol) Methyl-propylphosphinsäure werden in 600 ml Wasser gelöst und 84 g (1,5 Mol) Calciumoxid portionsweise unter lebhaftem Rühren eingetragen, dabei steigt die Temperatur auf 65°C. Nun wird bei dieser Temperatur gehalten, bis eine klare Lösung entsteht. Nun wird zur Trockene im Vakuum eingedampft. Man erhält nach Trocknung des Rückstandes bei 120°C im Vakuum-Trockenschrank 364 g. Ausbeute: ca. 85 % der Theorie.

### 1.6 Herstellung des Aluminiumsalzes der Methyl-propylphosphinsäure

115 g (0,943 Mol) Methyl-propylphosphinsäure werden in 310 g Wasser gelöst und 24,5 g (0,314 Mol) Aluminiumhydroxyd zugegeben. Dann wird 23 Stunden unter Rühren bei 98°C gehalten. Anschliessend wird abgesaugt und im Vakuumtrockenschrank getrocknet. Man erhält 113 g eines weißen Pulvers, das bis 380°C nicht schmilzt. Ausbeute: 90 % der Theorie.

### 1.7 Herstellung des Aluminiumsalzes der Methyl-octylphosphinsäure

115,2 g (0,6 Mol) Methyl-octylphospinsäure werden mit 250 ml Wasser auf 60°C erhitzt. Nun werden 15,6 g (0,2 Mol) Aluminiumhydroxyd zugegeben und auf 80°C erwärmt bei ständigem Rühren. Insgesamt wird der Ansatz bei 80 bis 90°C 15 Stunden gerührt, dann wird abgesaugt. Nach dem Trocknen erhält man 115 g eines weißen Pulvers, das bis 360°C nicht schmilzt. Ausbeute: 96 % der Theorie.

### 2. Herstellung und Prüfung von flammhemmenden Polyamid

Die phosphorhaltigen Verbindungen wurden mit dem Polymeren vermischt und auf einem handelsüblichen Zweiwellen-Compounder eingearbeitet. Bei glasfaserverstärkten Einstellungen wurden für Polyamid handelsübliche Glasfasern in die Schmelze dosiert. Die Massetemperatur bei der Compoundierung betrug ca. 265°C.

Die Probekörper wurden auf einer Spritzgießmaschine nach ISO 7792-2 hergestellt.

An Probekörper aus jeder Mischung wurden die Brandklasse UL 94 (Underwriter Laboratories) an Probekörper der Dicke 1,6 mm bzw. 1,2 mm bestimmt.

Nach UL 94 ergeben sich folgende Brandklassen:
- V-0: kein Nachbrennen länger als 10 Sekunden, Summe der Nachbrennzeiten bei 10 Beflammungen nicht größer als 50 Sekunden, kein brennendes Abtropfen, kein vollständiges Abbrennen der Probe, kein Nachglühen der Proben länger als 30 Sekunden nach Beflammungsende
- V-1: kein Nachbrennen länger als 30 Sekunden nach Beflammungsende, Summe der Nachbrennzeiten bei 10 Beflammungen nicht größer als 250 Sekunden, kein Nachglühen der Proben länger als 60 Sekunden nach Beflammungsende, übrige Kriterien wie bei V-0
- V-2: Zündung der Watte durch brennendes Abtropfen, übrige Kriterien wie bei V-1
- < V-2: erfüllt nicht die Brandklasse V-2.

Aus Polyamid 66 und jeweils 30 Gew.-% Calciumsalz bzw. Aluminiumsalz der Ethyl-methylphosphinsäure wurden mit 30 Gew.-% Glasfasern verstärkte Compounds ohne weitere Zusätze wie Verarbeitungsstabilisatoren hergestellt, daraus Probekörper gespritzt und diese dem Brandtest nach UL 94 unterworfen.

Vergleichweise wurde eine Einstellung mit Zinksalz der Ethyl-methylphosphinsäure mit den gleichen Konzentrationen Zinksalz und Glasfasern mitgefahren.

Die Ergebnisse sind in der folgenden Tabelle zusammengestellt.

| Salz der Ethylmethylphosphinsäure | Brandklasse UL 94 | |
|---|---|---|
| | Probekörperdicke 1,6 mm | Probekörperdicke 1,2 mm |
| Zinksalz | V-2 | < V-2 |
| Calciumsalz | V-0 | V-0 |
| Aluminiumsalz | V-0 | V-0 |

Die Tabelle zeigt deutlich die verbesserte flammhemmende Wirkung des Calcium- bzw. Aluminiumsalzes der Ethylmethylphosphinsäure im Vergleich zu der von Zinksalz der Ethylmethylphospinsäure.

## Patentansprüche

1. Formmasse, enthaltend Polyamid und ein Phosphinsäuresalz der Formel (I) und/oder ein Diphosphinsäuresalz der Formel (II) 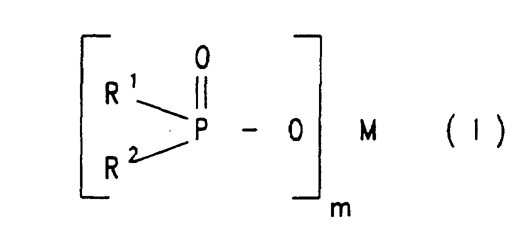 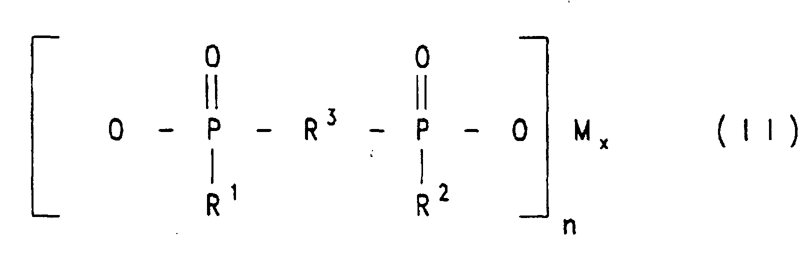 worin
R¹, R² C₁-C₁₆-Alkyl, vorzugsweise C₁-C₈-Alkyl, linear oder verzweigt, oder Phenyl;
R³ C₁-C₁₀-Alkylen, linear oder verzweigt, Arylen, Alkylarylen, Arylalkylen,
M Calcium-, Aluminium-Ionen;
m 2 oder 3;
n 1 oder 3;
x 1 oder 2
bedeuten, und/oder deren Polymere.

2. Formmasse nach Anspruch 1, die die Polyamide Polyamid 46 oder Polyamid 66 enthält.

3. Formmasse nach einem oder mehreren der Ansprüche 1 oder 2, die 5 bis 35 Gew.-% des Phosphinsäuresalzes oder des Diphosphinsäuresalzes enthält.

4. Formmasse nach einem oder mehreren der Ansprüche 1 oder 2, die 10 bis 25 Gew.-% des Phosphinsäuresalzes oder des Diphosphinsäuresalzes enthält.

5. Formmasse nach einem oder mehreren der Ansprüche 1 oder 2, die 15 bis 20 Gew.-% des Phosphinsäuresalzes oder Diphosphinsäuresalzes enthält.

6. Formmasse nach einem oder mehreren der Ansprüche 1 bis 5, die Glasfaser enthält.

7. Formmasse nach einem oder mehreren der Ansprüche 1 bis 6 wobei in Formel I oder II die Reste R¹, R², R³ die folgende Bedeutung besitzen:
R¹, R² = Methyl, Ethyl, n-Propyl, n-Butyl, tert.Butyl, iso-Propyl, n-Pentyl, n-Octyl, Phenyl,
R³ Methylen, Ethylen, n-Propylen, n-Butylen, iso-Propylen, tert.Butylen, n-Pentylen, n-Octylen, n-Dodecylen, Phenylen, Napthylen, Methylphenylen, Ethylphenylen, tert.Butylphenylen, Methyl-naphthylen, Ethylenaphthylen, tert.Butyl-naphthylen, Phenylmethyl, Phenylethylen, Phenylpropylen, Phenylbutylen.

8. Verwendung von Phosphinsäuresalz der Formel I oder Diphosphinsäuresalz der Formel II von Ansprüchen 1 oder 7 als Flammschutzmittel für Polyamide oder Polyamid-haltige Kunststoffe.

9. Verwendung von Polyamidformmassen nach einem oder mehreren der Ansprüchen 1 bis 7, die ein Phosphinsäuresalz der Formel I oder ein Diphosphinsäuresalz der Formel II enthalten, für elektrische Bauteile, Steckteile, mechanische Bauteile, Formteile, Gehäuse, Abdeckungen, Ummantelungen oder Beschichtungen.

## Claims

1. A molding material comprising polyamide and a phosphinic acid salt of the formula (I) and/or a diphosphinic acid salt of the formula (II) 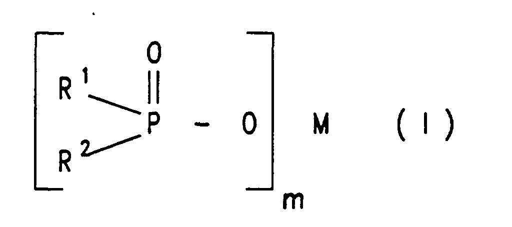 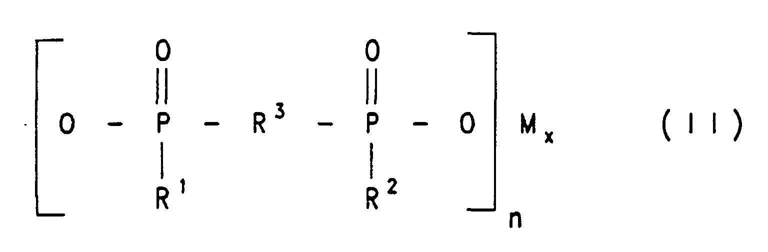 where
R¹ and R² are each C₁-C₁₆-alkyl, preferably C₁-C₈-alkyl, linear or branched, phenyl;
R³ is C₁-C₁₀-alkylene, linear or branched, arylene, alkylarylene, arylalkylene,
M is a calcium or aluminum ion;
m is 2 or 3;
n is 1 or 3;
x is 1 or 2
and/or polymers thereof.

2. The molding material of claim 1, comprising the polyamides nylon 46 or nylon 66.

3. The molding material of claim 1 or 2, comprising 5 to 35% by weight of the phosphinic or diphosphinic acid salt.

4. The molding material of claim 1 or 2, comprising 10 to 25% by weight of the phosphinic or diphosphinic acid salt.

5. The molding material of claim 1 or 2, comprising 15 to 20% by weight of the phosphinic or diphosphinic acid salt.

6. The molding material of one or more of claims 1 to 5, comprising glass fiber.

7. A molding material of one or more of claims 1 to 6, where, in formula I or II, the radicals R¹, R², R³ have the following meaning:
R¹ and R² are each methyl, ethyl, n-propyl, n-butyl, tert-butyl, isopropyl, n-pentyl, n-octyl or phenyl and
R³ is methylene, ethylene, n-propylene, n-butylene, isopropylene, tert-butylene, n-pentylene, n-octylene, n-dodecylene, phenylene, naphthylene, methylphenylene, ethylphenylene, tert-butylphenylene, methylnaphth ylene ethylnaphthylene tert-butylnaphthylene phenylmethylene, phenylethylene, phenylpropylene or phenylbutylene.

8. The use of a phosphinic acid salt of the formula I or diphosphinic acid salt of the formula II from claim 1 or 7 as a flame retardant for polyamides or polyamide-comprising plastics.

9. The use of polyamide molding materials of one or more of claims 1 to 7 comprising a phosphinic acid salt of the formula I or a diphosphinic acid salt of the formula II for electrical components, plug parts, mechanical components, moldings, housings, coverings, sheathings or coatings.

## Revendications

1. Matière à mouler contenant un polyamide et un sel d'acide phosphinique de formule (I) et/ou un sel d'acide diphosphinique de formule (II) 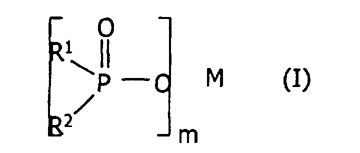 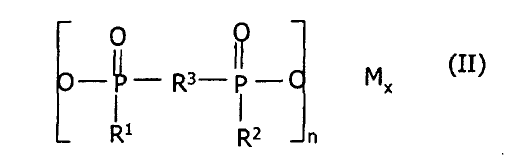 formules dans lesquelles
R¹, R² représentent un groupe alkyle en C₁-C₁₆, de préférence un groupe alkyle en C₁-C₈, linéaire ou ramifié, ou le groupe phényle ;
R³ représente un groupe alkylène en C₁-C₁₀ linéaire ou ramifié,
arylène,
alkylarylène,
arylalkylène,
M représente des ions calcium, aluminium ;
m est 2 ou 3 ;
n est 1 ou 3 ;
x est 1 ou 2
et/ou leurs polymères.

2. Matière à mouler selon la revendication 1, qui contient les polyamides polyamide 46 ou polyamide 66.

3. Matière à mouler selon une ou plusieurs des revendications 1 et 2, qui contient de 5 à 35 % en poids du sel d'acide phosphinique ou du sel d'acide diphosphinique.

4. Matière à mouler selon une ou plusieurs des revendications 1 et 2, qui contient de 10 à 25 % en poids du sel d'acide phosphinique ou du sel d'acide diphosphinique.

5. Matière à mouler selon une ou plusieurs des revendications 1 et 2, qui contient de 15 à 20 % en poids du sel d'acide phosphinique ou du sel d'acide diphosphinique.

6. Matière à mouler selon une ou plusieurs des revendications 1 à 5, qui contient des fibres de verre.

7. Matière à mouler selon une ou plusieurs des revendications 1 à 6, dans laquelle, dans la formule I ou II, les radicaux R¹, R², R³ ont les significations suivantes :
R¹, R² représentent les groupes méthyle, éthyle, n-propyle, n-butyle, tert-butyle, isopropyle, n-pentyle, n-octyle, phényle,
R³ représente les groupes méthylène, éthylène, n-propylène, n-butylène, isopropylène, tert-butylène, n-pentylène, n-octylène, n-dodécylène, phénylène, naphtylène, méthylphénylène, éthylphénylène, tert-butylphénylène, méthylnaphtylène, éthylnaphtylène, tert-butylnaphtylène, phénylméthylène, phényléthylène, phénylpropylène, phénylbutylène.

8. Utilisation d'un sel d'acide phosphinique de formule I ou d'un sel d'acide diphosphinique de formule II de la revendication 1 ou 7, en tant qu'agent ignifuge pour des polyamides ou des matières plastiques contenant des polyamides.

9. Utilisation de matières à mouler à base de polyamide selon une ou plusieurs des revendications 1 à 7, qui contiennent un sel d'acide phosphinique de formule I ou un sel d'acide diphosphinique de formule II, pour des composants électriques, éléments de fiches, composants mécaniques, pièces moulées, boîtiers, couvercles, enveloppes ou revêtements.
